# EUROPÄISCHE PATENTSCHRIFT

(11) **EP 2 403 665 B1**
(45) Veröffentlichungstag und Bekanntmachung des Hinweises auf die Patenterteilung: **12.07.2017**
(21) Anmeldenummer: 10703870.5
(22) Anmeldetag: 11.02.2010
(51) Int. Cl.: B21J 5/08, B21K 1/30, B21D 28/16, B21D 53/28, F16H 55/06

(54) **VORRICHTUNG ZUR HERSTELLUNG EINES PROFILS AN EINEM BLECHTEIL**
DEVICE FOR PRODUCING A PROFILE ON A SHEET METAL PART
DISPOSITIF DE RÉALISATION D'UN PROFIL SUR UNE PIÈCE EN TÔLE

(30) Priorität: 03.03.2009 DE 102009001305
(43) Veröffentlichungstag der Anmeldung: 11.01.2012
(73) Patentinhaber: ZF Friedrichshafen AG, 88046 Friedrichshafen (DE); Aweba Werkzeugbau GmbH Aue, 08280 Aue (DE)
(72) Erfinder: BROCKSTIEGER, Joerg, 66271 Kleinbittersdorf (DE); NONNWEILER, Werner, 66125 Saarbrücken (DE); LEONHARDT, Stephan, 08321 Zschorlau (DE)
(86) Internationale Anmeldenummer: PCT/EP2010/051727
(87) Internationale Veröffentlichungsnummer: WO 2010/100019

(56) Entgegenhaltungen:
- FR-A1- 2 524 354
- US-A1- 2001 039 865

## Beschreibung

Die Erfindung betrifft ein Verfahren zur Herstellung eines Profils nach dem Oberbegriff des Patentanspruches 1, eine Vorrichtung zur Durchführung des Verfahrens nach dem Oberbegriff des Patentanspruches 7 sowie ein Blechteil, herstellbar nach dem Verfahren nach dem Oberbegriff des Patentanspruches 12.

Blechteile mit Profilen, welche Funktionsflächen, z. B. ein Mitnahmeprofil oder eine Verzahnung aufweisen, werden vielfach durch Umformung und Stanzen bzw. Scherschneiden hergestellt. Um eine möglichst glatte, rissfreie Schnittfläche zu erhalten, wird das so genannte Feinschneiden, auch Genauschneiden oder Feinstanzen genannt, angewandt. Das Feinschneiden gehört zu den Verfahren des Scherschneidens mit der Besonderheit, dass der Spannungszustand in der Scherzone gezielt verändert wird, um ein Fließen und kein Reißen des Materials zu erreichen. Hierzu bedient man sich so genannter Ringzacken, welche sich von einer oder beiden Seiten in das Werkstück außerhalb der Schnittfläche eingraben und eine Druckspannung im Scherbereich erzeugen. Dadurch wird beim Schneidvorgang die Schubfließgrenze vor der Schubdruckgrenze erreicht. Darüber hinaus wird das Werkstück, z. B. eine Blechplatine oder ein umgeformtes Blechteil, zwischen einem Schneidstempel und einem Gegenhalter, auch Auswerfer genannt, eingeklemmt.

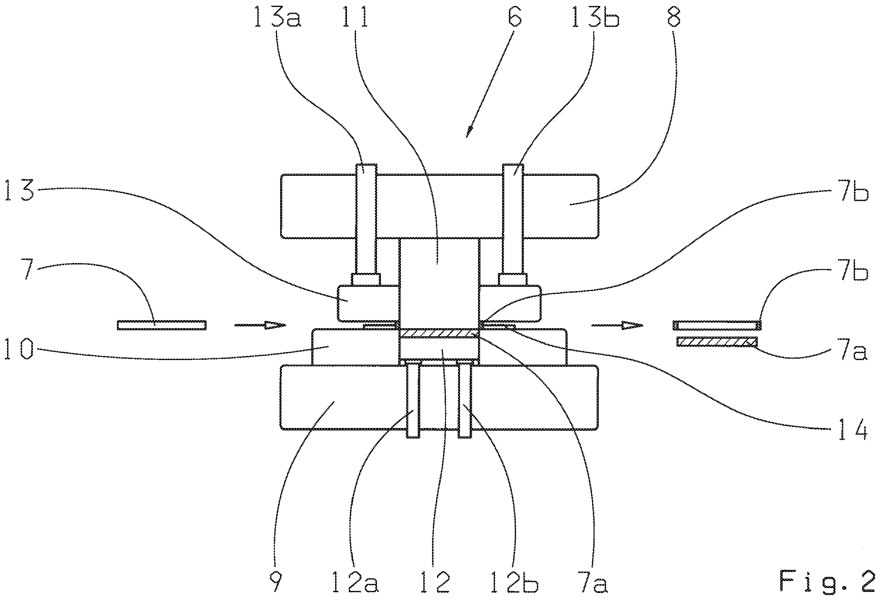

In der DE 197 38 635 C2 ist ein Feinschneidvorgang zur Herstellung einer exakten Schnittfläche beschrieben und dargestellt. In den Figuren 2 und 4 ist ein Werkstoffstreifen zwischen einer Führungsplatte und einer Schneidplatte eingespannt und wird durch Ringzacken festgehalten. Zwei miteinander bewegliche Stempel, ein Schneidstempel und ein Gegenhalter, klemmen das auszuschneidende Werkstück zwischen sich ein. Die Ringzacken üben - wie durch Pfeile dargestellt - eine Druckspannung in Richtung Scherfläche aus. Der Abstand der Ringzacke von der Schnittfläche liegt - nach der Fachliteratur - optimal bei der 1,5-fachen Blechdicke, in der Praxis ist ein Abstand im Bereich der einfachen Blechdicke üblich. Nachteilig hierbei ist, dass ein relativ hoher Verschnitt (Abfall) infolge des für das Feinschneiden notwendigen Klemmrandes anfällt.

In der FR 2524354 A1 ist ein Verfahren zur Herstellung eines Profils an einem Randbereich eines Blechteiles beschrieben wobei der Randbereich des Blechteiles durch mindestens einen Stauchvorgang auf eine Profilhöhe aufgedickt wird und anschließend das Profil in den aufgedickten Randbereich geschnitten wird.

Aus der gattungsgemäßen US 2001/039865 A1 sind ein Verfahren und eine Vorrichtung zur Herstellung eines Profils an einem Randbereich eines Blechteiles bekannt wobei das Profil in den Randbereich geschnitten wird und der Randbereich senkrecht zur Schneidrichtung auf dem gesamten Umfang abgestützt wird sowie während des Schneidvorganges zwischen einem Stempel und einem Gegenhalter eingespannt ist und in Schneidrichtung bewegt wird.

Die Erfindung geht von dem bekannten Verfahren des Feinschneidens aus, um bei der Herstellung eines Profils an einem Blechteil eine möglichst saubere Schnittfläche, welche als Funktionsfläche dient, zu erzielen. Vorteilhafterweise weist das Blechteil im Bereich des herzustellenden Profils eine Profilhöhe auf, welche größer als die Blechdicke der Ausgangsplatine ist.

Es ist Aufgabe der vorliegenden Erfindung, die Herstellung eines Profils der eingangs genannten Art bereitzustellen, wobei eine saubere Schnittfläche erreichbar ist und ein Klemmrand für eine Ringzacke vermieden wird. Diese Aufgabe wird durch eine Vorrichtung mit den Merkmalen des Anspruchs 1 gelöst. Als Ausgangsmaterial wird vorteilhafterweise ein Blech oder eine Platine mit einer Dicke s verwendet. In einem ersten bevorzugten Verfahrensschritt wird der Randbereich des Blechteiles, welcher das Profil erhalten soll, in mindestens einem Stauchvorgang aufgedickt, sodass die erforderliche Profilhöhe erreicht wird. Anschließend wird in einem zweiten Verfahrensschritt ein Schneidvorgang durchgeführt, durch welchen das gewünschte Profil in den aufgedickten Randbereich eingeschnitten wird. Um eine saubere, rissfreie Schnittfläche für das Profil zu erhalten, wird der verdickte Randbereich während des Schneidvorganges abgestützt. Dadurch wird eine Druckspannung erzeugt, die den Spannungszustand im Scherbereich derart verändert, dass die Schubfließgrenze vor der Schubbruchgrenze erreicht wird. Damit werden Risse in der Schnittfläche, d. h. im Scherbereich vermieden, und es wird eine saubere, glatte Schnittfläche erzielt, welche ohne weitere Nachbearbeitung als Funktionsfläche, z. B. als Mitnahmeverzahnung verwendbar ist. Durch die Abstützung entfällt ein Klemmrand für Ringzacken. Für den Stauchvorgang ergibt sich der Vorteil, dass nur ein geringes Volumen, d. h. der unmittelbare Profilbereich aufgedickt werden muss (ohne Klemmrand). Bei Verwendung des Profils als Verzahnung ergibt sich damit eine größere Zahnbreite, d. h. eine geringere Flächenpressung für die Zähne. Damit wird der weitere Vorteil erreicht, dass die Gegenverzahnung aus einem Material mit einer geringeren zulässigen Flächenpressung, z. B. einer Aluminiumdruckgusslegierung hergestellt werden kann. Damit kann das Teil mit der Gegenverzahnung als kostengünstiges Druckgussteil hergestellt werden.

Nach einer weiteren bevorzugten Verfahrensvariante wird der verdickte Randbereich während des Schneidvorganges zwischen einem Schneidstempel und einem Gegenhalter eingeklemmt - ähnlich, wie dies aus dem Feinschneidprozess bekannt ist. Auch diese Maßnahme trägt zu einer sauberen Schnittfläche bei. Der Gegenhalter fungiert nach dem Schneidvorgang als Auswerfer.

Nach einer weiteren bevorzugten Verfahrensvariante wird der äußere, über den Stempel hinausstehende Bereich des verdickten Randbereiches fest eingespannt und einer Druckbelastung unterworfen. Damit wird der Vorteil erreicht, dass eine senkrechte Schnittfläche erzielt, d. h. eine konische Schnittfläche vermieden wird.

Das Verfahren erlaubt die Herstellung von runden und eckigen Formen, von Außenprofilen, z. B. Außenverzahnungen und Innenprofilen, z. B. einer Innenverzahnung. Die Abstützung kann also jeweils in Richtung auf die Schnittfläche von radial außen oder von radial innen erfolgen.

Nach einer besonders bevorzugten Variante wird die Platine vor dem Aufdicken zu einem napfförmigen Blechteil mit einem axial abgestreckten Randbereich umgeformt. Der axial abgestreckte, d. h. etwa hohlzylindrisch ausgebildete Randbereich ist die Vorstufe für den anschließenden Stauchvorgang. In diesem Verfahrensschritt wird der abgetreckte Randbereich in axialer Richtung gestaucht, woraus sich die Aufdickung des Blechmaterials im Randbereich ergibt. Die Stauchung kann in einem oder mehreren Schritten erfolgen, um das Material zu schonen und Risse zu vermeiden. Durch den Stauchvorgang wird die für das Profil erforderliche Profilhöhe erreicht. Die radiale Tiefe des aufgedickten Randbereiches entspricht etwa der Profiltiefe, z. B. der Zahnhöhe. Daraus ergibt sich der Vorteil, dass nur ein minimaler Bereich, d. h. ein minimales Volumen aufgestaucht werden muss. Der aufgedickte Randbereich benötigt nur ein relativ geringes Übermaß, welches erheblich geringer als die Blechstärke s ist. Wie bereits erwähnt, ist ein Klemmrand herkömmlicher Art nicht erforderlich und muss daher nicht aufgestaucht werden.

Erfindungsgemäß weist die Vorrichtung ein Stützelement auf, welches den aufgedickten Randbereich des Blechteiles aufnimmt und senkrecht zur Schneidrichtung und/oder Schnittfläche abstützt. Das Stützelement verhindert, dass das Material des verdickten Randbereiches beim Schneidvorgang ausweicht oder verdrängt wird. Dadurch entsteht als Reaktion eine Druckspannung, welche dem Scherbereich überlagert wird und dort den Spannungszustand derart verändert, dass die Schubfließgrenze vor der Schubbruchgrenze erreicht wird. Damit wird eine rissfreie Schnittfläche erzielt. Ein Klemmrand außerhalb der Schnittfläche, in welchen Ringzacken herkömmlicher Art eingreifen, entfällt. Ringzacken sind somit für die erfindungsgemäße Vorrichtung nicht erforderlich. Das Stützelement ist der Außenform des Werkstückes angepasst und kann beispielsweise ringförmig ausgebildet sein, sodass es den aufgedickten Randbereich eng umschließt und eine radiale Presswirkung ausübt.

Das Stützelement kann auch für die Herstellung von Innenprofilen, z. B. Innenverzahnungen eingesetzt werden: es ist in diesem Falle als Stützring ausgebildet, welcher das Material von radial innen nach außen, senkrecht zur Schneidrichtung abstützt. Erfindungsgemäß ist das Stützelement geteilt ausgebildet und umfasst mindestens zwei Teile. Dadurch kann die Herstellung vereinfacht werden. Erfindungsgemäß weist das Stützelement bewegliche Teile nach Art von Schließbacken auf, welche radial zustellbar und somit für unterschiedliche Werkstückgrößen verwendbar sind.

Nach einer vorteilhaften Ausführungsform weist die Vorrichtung eine Pressplatte (auch Niederhalter genannt) auf, welche koaxial zum Stempel angeordnet und geführt ist. Damit kann das Werkstück, d. h. der aufgedickte Randbereich zwischen Pressplatte und Schneidplatte (Schneidmatrize) eingespannt und einer Druckspannung unterworfen werden, was sich vorteilhaft auf die Qualität der erzielten Schnittfläche auswirkt. Insbesondere kann damit eine konische Schnittfläche vermieden werden. Ein Blechteil kann nach dem vorgenannten Verfahren hergestellt werden. Danach weist das Blechteil ein Außenprofil auf, welches als Mitnahmeprofil, insbesondere als Außenverzahnung ausgebildet ist und eine Profilhöhe aufweist, die größer als die Blechstärke ist.

Nach einer besonders bevorzugten Ausführungsform ist vorgesehen, dass das Blechteil als Führungsscheibe eines Planetenträgers in einem Getriebe ausgebildet ist. Daraus ergibt sich der Vorteil, dass der Planetenträger, insbesondere seine Führungsscheibe durch spanlose Umformung, d. h. kostengünstig herstellbar ist, wobei die Funktionsflächen des Mitnahmeprofils keiner weiteren Bearbeitung bedürfen. Darüber hinaus kann die Mitnahmeverzahnung der Führungsscheibe mit einer Gegenverzahnung eines weiteren Getriebeteils gepaart werden, welches als Druckgussteil, insbesondere aus einer Aluminiumlegierung ausgebildet ist. Durch die erhöhte Zahnbreite des Mitnahmeprofils an der Führungsscheibe ergibt sich eine geringere Flächenpressung für die Verzahnung, welche auch für das Druckgussteil im zulässigen Bereich liegt.

Ausführungsbeispiele der Erfindung sind in der Zeichnung dargestellt und werden im Folgenden näher beschrieben, wobei sich aus der Beschreibung und/oder der Zeichnung weitere Merkmale und/oder Vorteile ergeben können. Es zeigen
Fig. 1 eine Führungsscheibe mit Mitnahmeverzahnung für einen Planetenträger,
Fig. 1a - 1d einzelne Verfahrensschritte zur Herstellung der Führungsscheibe gemäß Fig. 1 und
Fig. 2 eine erfindungsgemäße Vorrichtung.

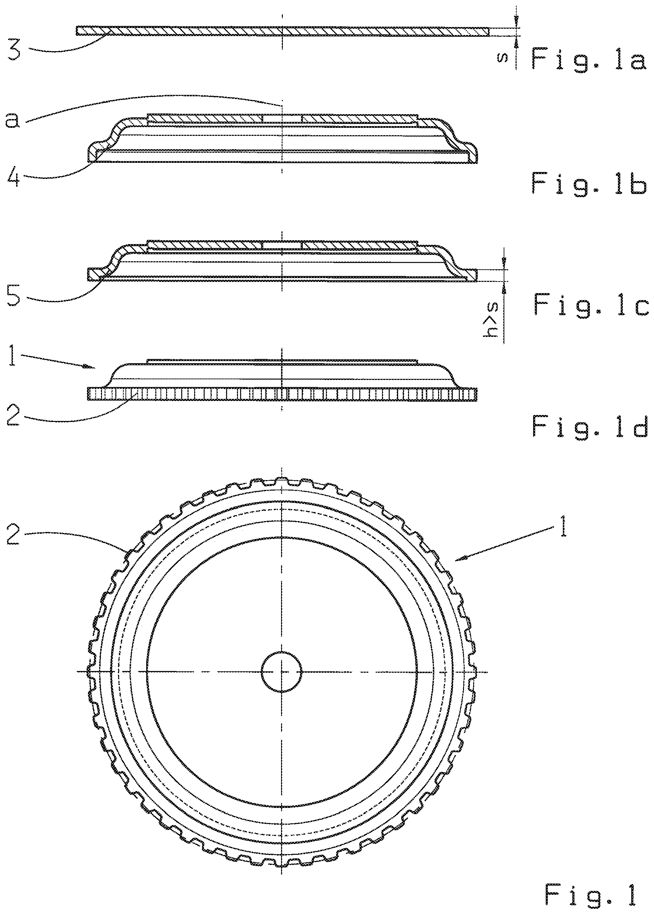

**Fig. 1** zeigt eine fertig hergestellte Führungsscheibe 1, welche für einen nicht dargestellten Planetenträger eines Planetenradsatzes verwendbar ist. Die Führungsscheibe 1 weist auf ihrem Umfang ein als Außenverzahnung 2 ausgebildetes Mitnahmeprofil auf. Die Außenverzahnung 2 greift in eine nicht dargestellte Innenverzahnung eines weiteren Getriebeteils ein, welches vorzugsweise als topfförmiges Druckgussteil ausgebildet ist, während die Führungsscheibe 1 aus Stahlblech hergestellt ist. Da der Druckgusswerkstoff, vorzugsweise eine Aluminiumlegierung, eine geringere zulässige Flächenpressung als Stahl aufweist, ist die Zahnbreite der Außenverzahnung 2 an die Mindestzahnbreite der Innenverzahnung des Druckgussteiles anzupassen. Dies erfolgt - wie im Folgenden beschrieben wird - durch eine Aufdickung des Ausgangsmaterials für die Führungsscheibe 1.

**Fig. 1a** bis **Fig. 1d** zeigen einzelne Verfahrensschritte zur Herstellung der fertigen Führungsscheibe 1 durch Umformung, d. h. spanlose Formgebung. In Fig. 1a ist das Ausgangsmaterial in Form einer Platine 3 aus Stahlblech dargestellt. Die Platine 3 weist eine Materialdicke s auf. Die Platine 3 ist kreisrund ausgebildet und wird in einem ersten Verfahrensschritt zu einem napfförmigen Zwischenteil 4 umgeformt, welches einen Randbereich 4a aufweist, der zylindrisch ausgebildet ist. Die Zylinderachse ist mit a bezeichnet. Fig. 1c zeigt ein Zwischenteil 5 als Ergebnis des nächsten Verfahrensschrittes, in welchem der abgestreckte Randbereich 4a gemäß Fig. 1b zu einem aufgedickten Randbereich durch Stauchen umgeformt wurde. Das Stauchen kann in einem oder mehreren Schritten erfolgen, je nach Grad der Umformung. Als Ergebnis weist der Randbereich 5a eine Höhe h auf, welche größer als die Ausgangsdicke s ist und der erforderlichen Profilhöhe entspricht. In einem nächsten Verfahrensschritt wird die Außenverzahnung 2 in den aufgedickten Randbereich 5a eingeschnitten. Das Ergebnis ist in Fig. 1d und Fig. 1 dargestellt. Der Schneidvorgang, welcher im Ergebnis dem bekannten Feinschneiden entspricht, wird im Folgenden anhand einer erfindungsgemäßen Vorrichtung, dargestellt in Fig. 2, beschrieben. Hier ist hervorzuheben, dass das Zwischenteil 5 gemäß Fig. 1c vor dem Scheidvorgang nur eine geringe Materialzugabe im Durchmesser aufweist: das Aufmass gegenüber dem fertig geschnittenen Zahnkopf beträgt etwa 0,5 mm. Die Materialdicke s der Platine 3 beträgt bei einem bevorzugten Ausführungsbeispiel 4,5 mm. Die Profilhöhe h des aufgedickten Randbereiches 5a gemäß Fig. 1c beträgt 6,5 mm. Würde man die Außenverzahnung nach dem herkömmlichen Feinschneidprozess unter Verwendung von Ringzacken herstellen, wäre ein Klemmrand von ca. 8 bis 10 mm notwendig, den man nicht aufstauchen könnte. Ein solcher Klemmrand entfällt bei dem bevorzugten Verfahren.

**Fig. 2** zeigt eine erfindungsgemäße Vorrichtung 6 zur Durchführung des Schneidverfahrens sowie ein Werkstück 7, welches der Vorrichtung 6 zugeführt wird und dem Zwischenteil 5 gemäß Fig. 1c entspricht. Die Vorrichtung 6 umfasst ein Werkzeugoberteil 8 sowie ein Werkzeugunterteil 9, auf welchem eine Scheidplatte 10 (auch Schneidmatrize 10 genannt) fest angeordnet ist. Im Werkzeugoberteil 8 ist ein vertikal beweglicher Schneidstempel 11 geführt, im Werkzeugunterteil 9 und in der Schneidplatte 10 ist ein Gegenhalter 12 vertikal beweglich, geführt durch Säulen 12a, 12b, angeordnet. Zwischen Schnaidstampel 11 und Gegenhalter 12 ist das bereits geschnittene Werkstück 7a - hier vereinfacht als Platte dargestellt - eingeklemmt. Die Einspannung des Werkstückes zwischen zwei Stempeln entspricht dem bekannten Feinschneidverfahren. Oberhalb der Schneidplatte 10 ist eine Pressplatte 13 (auch Niederhalter genannt) angeordnet und über Säulen 13a, 13b im oberen Werkzeugteil 8 geführt. Auf der Schneidplatte 10 liegt ein ringförmiges Stützelement 14 auf, welches das Werkstück 7 während des Schneidvorganges radial nach außen abstützt. In der Zeichnung ist der Schneidvorgang bereits abgeschlossen, d. h. der Schneidstempel 11 befindet sich mit seiner Unterkante unterhalb der Oberkante der Schneidmatrize 10. Das Werkstück 7a ist also bereits randseitig beschnitten. Als Abfall bleibt ein Ring 7b stehen, welcher nur eine Stärke von ca. 0,5 mm aufweist (wie bereits oben erwähnt). Während des Schneidvorganges ist der äußere Ring 7b mit einer Druckkraft durch die Pressplatte 13 belastet, wodurch eine Konizität der Schnittfläche vermieden wird.

Das bevorzugte Verfahren, welches mit der erfindungsgemäßen Vorrichtung 6 durchgeführt wird, läuft wie folgt ab: Der Vorrichtung 6 wird das Werkstück 7 zugeführt, welches dem Zwischenteil 5 in Fig. 1c entspricht, d. h. einen aufgedickten Randbereich 5a aufweist. Das Werkstück 7 wird in das ringförmige Stützelement 14 eingesetzt, sodass es auf dem gesamten Umfang eng vom Stützelement 14 umschlossen ist. Das Stützelement 14 weist eine geringere Höhe als das Werkstück 7 auf. Das Werkstück 7 wird auf seinem äußeren Rand 7b durch die Pressplatte 13 niedergedrückt, d. h. mit einer Druckkraft belastet. Anschließend fährt der Schneidstempel 11 gleichzeitig mit dem Gegenhalter 12 nach unten und schneidet dabei ein Außenprofil, hier eine Außenverzahnung in das Werkstück 7. Das fertig geschnittene Werkstück (Fertigteil) ist mit 7a, der auf der Schneidplatte 10 stehen gebliebene Ring, der Stanzabfall, ist mit 7b bezeichnet. Das Fertigteil 7a wird mit dem nach oben fahrenden Gegenhalter 12 ausgeworfen.

Das bevorzugte Verfahren kann auch zur Herstellung von Innenprofilen, insbesondere Innenverzahnungen eingesetzt werden. In diesem Falle ist das Stützelement, ausgebildet als Stützring, innerhalb der Schnittfläche angeordnet und stützt das Material beim Schneidvorgang nach innen gegen die Schnittfläche ab.

### Bezugszeichen

- 1: Führungsscheibe
- 2: Mitnahmeprofil
- 3: Platine
- 4: Zwischenteil
- 4a: Randbereich
- 5: Zwischenteil
- 5a: aufgedickter Randbereich
- 6: Vorrichtung
- 7: Werkstück
- 7a: Fertigteil
- 7b: Stanzabfall
- 8: oberes Werkzeugteil
- 9: unteres Werkzeugteil
- 10: Schneidplatte
- 11: Schneidstempel
- 12: Gegenhalter
- 12a: Säule
- 12b: Säule
- 13: Pressplatte
- 13a: Säule
- 13b: Säule
- 14: Stützelement

- a: Zylinderachse
- s: Blechstärke
- h: Profilhöhe

## Patentansprüche

1. Vorrichtung zur Herstellung eines Profils (2) an einem Randbereich eines Blechteiles (1) durch Scherschneiden, umfassend einen Schneidstempel (11), einen Gegenhalter (12), eine Schneidplatte (10) sowie ein Stützelement (14), wobei bei Verwendung der Vorrichtung:
- das Profil (2) in den Randbereich des Blechteiles (1) geschnitten wird, und
- der Randbereich senkrecht zur Schneidrichtung auf dem gesamten Umfang mit dem Stützelement (14), welches den Randbereich des Blechteiles (1) aufnimmt, abgestützt wird und während des Schneidvorganges zwischen dem Stempel (11) und dem Gegenhalter (12) eingespannt ist und in Schneidrichtung bewegt wird,
**dadurch gekennzeichnet, dass** das Stützelement (14) geteilt ist und mindestens zwei Teile umfasst, wobei die Teile des Stützelementes (14) nach Art von Schließbacken beweglich, insbesondere radial zustellbar sind.

## Claims

1. Device for producing a profile (2) on an edge region of a sheet metal part (1) by shearing, comprising a cutting punch (11), a counterholder (12), a cutting plate (10) and a support element (14), wherein, when the device is in use:
- the profile (2) is cut into the edge region of the sheet metal part (1), and
- the edge region is supported perpendicular to the cutting direction over the entire circumference by the support element (14) which receives the edge region of the sheet metal part (1), is clamped during the cutting process between the punch (11) and the counterholder (12) and is moved in the cutting direction,
**characterized in that** the support element (14) is divided and comprises at least two parts, wherein the parts of the support element (14) can be moved in the manner of clamping jaws, and in particular can be adjusted radially.

## Revendications

1. Dispositif de fabrication d'un profil (2) sur une région de bord d'une pièce en tôle (1) par cisaillage, comprenant un poinçon de découpage (11), un support conjugué (12), une plaque de découpage (10) ainsi qu'un élément de support (14), dans lequel, lors de l'utilisation du dispositif :
- le profil (2) est découpé dans la région de bord de la pièce en tôle (1) et
- la région de bord est supportée perpendiculairement à la direction de coupe sur toute la périphérie par l'élément de support (14) qui reçoit la région de bord de la pièce en tôle (1) et, pendant l'opération de coupe, est serrée entre le poinçon (11) et le support conjugué (12) et est déplacée dans la direction de coupe, **caractérisé en ce que** l'élément de support (14) est divisé et comprend au moins deux parties, les parties de l'élément de support (14) pouvant être approchées de manière déplaçable, en particulier radialement, à la manière de mâchoires de serrage.
